# NEW EUROPEAN PATENT SPECIFICATION

(11) **EP 1 900 774 B2**
(45) Date of publication and mention of the opposition decision: **19.07.2017**
(45) Mention of the grant of the patent: 31.10.2012
(21) Application number: 06746846.2
(22) Date of filing: 25.05.2006
(51) Int. Cl.: C08G 59/14, C09J 163/00, C08G 59/40, C08G 18/36, C08G 18/44, C08G 18/58, C08G 18/10, C08G 18/48, C08L 63/00

(54) **HARDENABLE RESIN COMPOSITION**
HÄRTBARE HARZZUSAMMENSETZUNG
COMPOSITION DE RESINE DURCISSABLE

(30) Priority: 09.06.2005 JP 2005169130
(43) Date of publication of application: 19.03.2008
(73) Proprietor: Adeka Corporation, Tokyo 116-8554 (JP)
(72) Inventor: BABA, Kazutaka, c/o ADEKA CORPORATION, Saitama-gun, Saitama 3460101 (JP); SATO, Daisuke, c/o ADEKA CORPORATION, Saitama-gun, Saitama 3460101 (JP)
(74) Representative: Forstmeyer, Dietmar
(86) International application number: PCT/JP2006/310467
(87) International publication number: WO 2006/132093

(56) References cited:
- EP-A1- 1 498 441
- WO-A1-02/088214
- CA-A1- 2 510 486
- GB-A- 2 109 384
- JP-A- H0 559 347
- JP-A- 03 220 221
- JP-A- 05 148 337
- JP-A- 05 155 973
- JP-A- 56 127 676
- JP-A- 61 040 311
- JP-A- 61 296 015
- JP-A- 62 195 012
- JP-A- 62 195 013
- JP-A- 62 195 014
- US-A1- 2005 043 420
- US-B2- 7 622 525
- "Epoxy resin compsn. for structural adhesives for car parts - comprises bisphenol type epoxy resin, block isocyanate contg. urethane modified epoxy resin and carboxyl-contg. butadiene-acrylonitrile liq. rubber", DERWENT, 1 January 1994 (1994-01-01), XP002289268, [retrieved on 2011-12-01] -& JP 5 148337 A (YOKOHAMA RUBBER CO LTD) 15 June 1993 (1993-06-15)
- DATABASE WPI Week 199329 Thomson Scientific, London, GB; AN 1993-232406 XP002664807, -& JP 5 155973 A (ASAHI DENKA KOGYO KK) 22 June 1993 (1993-06-22)
- RIEW C.K.; KINLOCH A.J.: 'Toughened Plastics II, Novel Approaches in Science and Engineering', 1996, AMERICAN CHEMICAL SOCIETY, WASHINGTON, DC page 75-93

## Description

### Technical Field

The present invention relates to a hardenable resin composition, more particularly to a hardenable resin composition which contains a urethane-modified epoxy resin, a blocked urethane and a latent hardener, has an excellent adhesion to a substrate, and provides a hardened product thereof having flexibility over a wide temperature range from low to high temperatures. The hardenable resin composition is suitably used as a structural adhesive.

### Background Art

The structural adhesive is widely used as a bonding agent for metallic members in the field of automobiles, ships, aircrafts, spacecrafts, civil engineering, buildings, and others. As the structural adhesive, a thermosetting structural adhesive is widely used, that is obtained by modifying a base epoxy resin with an elastomer and others.

For use as the structural adhesive, it is a matter of course, that the adhesive is required to have not only an excellent adhesion to a substrate, but also flexibility so as to maintain the adhesion. For instance, when existing structural adhesives are used at low temperatures, the adhesion thereof is lowered because the flexibility is lowered, so that they are not suitably used for applications such as automobile structural adhesives where they are used over a wide temperature range from low to high temperatures.

In Patent Document 1, there is proposed a hardenable epoxy block-urethane composition that is obtained from an epoxy resin, a blocked isocyanate compound, and a latent hardener. However, the composition is insufficient in adhesion.
In Patent Document 2, there is proposed an epoxy resin that comprises a bisphenol type epoxy resin, a urethane-modified epoxy resin containing a blocked isocyanate, a carboxyl group-containing butadiene-acrylonitrile liquid rubber, and a hardener and is suitably used for the structural adhesive. However, the composition is also insufficient in adhesion.
Further, in Patent Document 3, there is proposed an epoxy resin adhesive composition that contains 10 wt% or more of a blocked isocyanate modified epoxy resin based on the total epoxy resin. However, the composition is also insufficient in adhesion.

Patent Document 1: Japanese Patent Laid-Open Publication No. H5-155973
Patent Document 2: Japanese Patent Laid-Open Publication No. H5-148337
Patent Document 3: Japanese Patent Laid-Open Publication No. H7-41750

### Disclosure of the Invention

### Problems to be Solved by the Invention

It is an object of the present invention to provide a hardenable resin composition having an excellent adhesion to a substrate, exhibiting an excellent flexibility over a wide temperature range from low to high temperatures, and being suitably used as a structural adhesive.

### Means for Solving the Problems

The present inventors have made intensive studies and found that a hardenable resin composition containing a urethane-modified epoxy resin, a block urethane, and a latent hardener has an excellent adhesion to a substrate and that the hardened product of the composition exhibits flexibility over a wide temperature range from low to high temperatures. The present invention is based on this finding.

Namely, the present invention provides a hardenable resin composition comprising a urethane-modified epoxy resin (A), a blocked urethane (B), and a latent hardener (C), wherein
the urethane-modified epoxy resin (A) is one obtained by reacting a polyepoxy compound (A1) with a polyurethane (A2), and the polyurethane (A2) is one obtained by reacting a polyhydroxy compound (a-1) with an excess amount of a polyisocyanate (a-2) and has an isocyanate (NCO) content of 0.1 to 10 mass%;
the blocked urethane (B) is one obtained by blocking a polyurethane (B1) with a blocking agent (B2), wherein the blocking agent (B2) is selected from the group consisting of phenols; and the polyurethane (B1) is one obtained by reacting a polyhydroxy compound (b-1) with an excess amount of a polyisocyanate compound (b-2) and has an isocyanate (NCO) content of from 0.1 to 10 mass%.

### Best Mode for Carrying Out the Invention

Hereinafter, the hardenable resin composition of the present invention will be explained in detail.

As the urethane-modified epoxy resin that is the component (A) used in the present invention, there may be used a urethane-modified epoxy resin obtained by reacting a polyepoxy compound (A1) with a polyurethane (A2) wherein the polyurethane (A2) is one obtained by allowing a polyhydroxy compound (a-1) to react with an excess amount of a polyisocyanate (a-2) and has an isocyanate (NCO) content of 0.1 to 10 mass%.

The polyepoxy compound (A1) may include, for example, polyglycidylether compounds of single-nucleus polyphenol compounds such as hydroquinone, resorcin, pyrocatechol, fluoroglucinol and the like; polyglycidylether compounds of poly-nucleus polyphenol compounds such as dihydroxynaphthalene, biphenol, methylenebisphenol (bishenolF), methylenebis(orthocresol), ethylidenebisphenol, isopropylidenebisphenol (bisphenolA), isopropylidenebis(orthocresol), tetrabromo-bisphenolA, 1,3-bis(4-hydroxycumylbenzene), 1,4-bis(4-hydroxylcumylbenzene), 1,1,3-tris(4-hydroxyphenyl) butane, 1,1,2,2-tetra(4-hydroxyphenyl) ethane, thiobisphenol, sulfobisphenol, oxybisphenol, phenolnovolak, orthocresolnovolak, ethylphenolnovolak, butylphenolnovolak, octylphenolnovolak, resorcinnovolak, terpenephenol and the like; polyglycidylether compounds of polyols such as ethyleneglycol, propyleneglycol, butyleneglycol, hexanediol, polyglycol, thiodiglycol, glycerin, trimethylolpropane, pentaerythrytol, sorbitol, a bisphenol A-ethyleneoxide adduct and the like; glycidylesters of aliphatic, aromatic or alicyclic polybasic acids such as maleic acid, fumaric acid, itaconic acid, succinic acid, glutaric acid, suberic acid, adipic acid, azelaic acid, sebacic acid, diamer acid, trimer acid, phthalic acid, isophthalic acid, terephthalic acid, trimellitic acid, trimesic acid, pyromellitic acid, tetrahydrophthalic acid, hexahydrophthalic acid, endomethylene tetrahydrophthalic acid and the like; and homopolymers or copolymers of glycidylmethacrylate; epoxy compounds having a glycidylamino group such as N,N-diglycidylaniline, bis(4-(N-methyl-N-glycidylamino) phenyl) methane, diglycidyl ortho-toluidine and the like; epoxized cycloolefin compounds such as vinylcyclohexene diepoxide, dicyclopentanediene diepoxide, 3,4-epoxycyclohexylmethyl-3,4-epoxycyclohexane carboxylate, 3,4-epoxy-6-methylcyclohexylmethyl-6-methylcyclohexane carboxylate, bis(3,4-epoxy-6-methylcyclohexylmethyl) adipate and the like; epoxized conjugated diene polymers such as epoxized polybutadiene, epoxized styrene-butadine copolymers and the like; and heterocyclic compound such as triglycidylisocyanurate. These polyepoxy compounds may be used in such a form that are intramolecularly cross-linked with an endoisocyanate prepolymer or are polymerized with a polyvalent active hydrogen bearing compound (such as polyphenols, polyamines, and polyphosphates).

Among these polyepoxy compounds, the bisphenol type epoxy resin is preferably used because a hardenable resin composition having strong adhesion and toughness can be obtained.

The polyhydroxy compound (a-1) used for the polyurethane (A2) may include, for example, polyetherpolyol, polyesterpolyol, polycarbonatepolyol, polyesteramidepolyol, acrylpolyol, polyurethanepolyol and the like.

As the polyetherpolyol, there may be used preferably a polyalkyleneglycol (having a molecular weight of around 100 to 5500) adduct of polyol.

The polyol may include, for example, aliphatic diols such as ethyleneglycol, propyleneglycol, 1,4-butyleneglycol (tetramethyleneglycol), neopentaneglycol and the like; triols such as glycerin, trioxyisobutane, 1,2,3-butanetriol, 1,2,3-pentanetriol, 2-methyl-1,2,3-propanetriol, 2-methyl-2,3,4-butanetriol, 2-ethyl-1,2,3-butanetriol, 2,3,4-pentanetriol, 2,3,4-hexanetriol, 4-propyl-3,4,5-heptanetriol, 2,4-dimethyl-2,3,4-pentanetriol, pentamethylglycerin, pentaglycerin, 1,2,4-butanetriol, 1,2,4-pentanetriol, trimethylolpropane and the like; tetrols such as erythrytol, pentaerythrytol, 1,2,3,4-pentanetetrol, 2,3,4,5-hexanetetrol, 1,2,3,5-pentanetetrol, 1,3,4,5-hexanetetrol and the like; pentols such as adonitol, arabitol, and xylitol; and hexanols such as sorbitol, mannitol, and iditol.
Among these polyols, diols to tetrols, particularly propyleneglycol, 1,4-butyleneglycol, and glycerin are preferred.

The aforementioned polyetherpolyol may be produced in a conventional process by adding a C₂₋₄ alkyleneoxide to the polyols in such a manner that the resulting polyetherpolyol attains a predetermined molecular weight. As the C₂₋₄ alkyleleoxide, there may be mentioned, for example, ethyleneoxide, propyleneoxide, butyleneoxide (tetramethyleneoxide), but particularly propyleneoxide and butyleneoxide are preferable.

As the aforementioned polyesterpolyol, there may be mentioned, for example, conventionally known polyesters that are produced from polycarboxylic acids and polyols or polyesters that are obtained from lactams, and the like.
As the polycarboxylilc acids, for example, there may be used any carboxylic acid such as benzene tricarboxylic acid, adipic acid, succinic acid, suberic acid, sebacic acid, oxalic acid, methyladipic acid, glutaric acid, pimelic acid, azelaic acid, phthalic acid, terephthalic acid, isophthalic acid, thiodipropionic acid, maleic acid, fumaric acid, citraconic acid, itaconic acid and the like, as appropriate.

As the polyols, for example, there may be used any polyol such as ethyleneglycol, propyleneglycol 1,4-butanediol, 1,3-butanediol, 1,5-pentanediol, 1,6-hexanediol, bis(hydroxymethylcyclohexane), diethyleneglycol, 2,2-dimethylpropyleneglycol, 1,3,6-hexanetriol, trimethylolpropane, pentaerythrytol, sorbitol, glycerin and the like, as appropriate. Besides these polyols, there may be used a polyhydroxy compound such as polytetramethyleneglycol, polycaprolactoneglycol and the like.

As the aforementioned polycarbonate polyol, there may be mentioned, for example, a product that is obtained from a reaction such as dephenolization between diol and diphenilcarbonate, dealcoholization between diols and dialkylcarbonates or deglycolization between diols and alkylenecarbonates. The diols may include, for example, ethyleneglycol, 1,2-propyleneglycol, 1,3-propyleneglycol, 1,2-butanediol, 1,3-butanediol, 1,4-butanediol, 1,5-pentanediol, 1,6-hexanediol, 1,4-cyclohexanediol, 1,4-cyclohexane dimethanol, 1,7-heptanediol, 1,8-octanediol, 1,9-nonanediol, 1,10-decanediol, neopentylglycol, 3-methyl-1,5-pentanediol, 3,3-dimethylolheptane and the like.

The polyisocyanate compound (a-2) used for the polyurethane (A2) may include, for example, propane-1,2-diisocyanate, 2,3-dimethylbutane-2,3-diisocyanate, 2-methylpentane-2,4-diisocyanate, octane-3,6-diisocyanate, 3,3-dinitropentane-1,5-diisocyanate, octane-1,6-diisocyanate, 1,6-hexamethylene diisocyanate (HDI), trimethylhexamethylene diisocyanate, lysine diisocyanate, tolyrene diisocyanate (TDI), xylyrene diisocyanate, metatetramethyl xylyrene diisocyanate, isophorone diisocyanate(3-isocyanatemethyl-3,5,5-trimethylcyclohexylisocyanate), 1,3- or 1,4-bis(isocyanatemethyl) cyclohexane, diphenylmethane-4,4'-diisocyanate (MDI), dicyclohexylmethane-4,4'-diisocyanate (hydrogenated MDI), hydrogenated tolylene diisocyanate and the like, and the mixtures thereof. Isocyanurates obtained by trimerization of these polyisocyanate compounds also may be used.
Among these polyisocyanate compounds, at least one kind selected from the group consisting of 1,6-hexamethylene diisocyanate, tolylene diisocyanate, isophorone diisocyanate, and an isocyanurate of 1,6-hexamethylene diisocyanate is preferably used because a hardenable resin composition having strong adhesion to metallic substrates can be obtained.

The polyurethane (A2) can be produced from the polyhydroxy component (a-1) and the polyisocyanate component (a-2) in a conventional process.
The used amounts of the components (a-1) and (a-2) are selected in such a manner that the amount of the component (a-2) is in excess based on that of the component (a-1). Specifically, the used amounts are selected in such a manner that the number of the isocyanate group of the component (a-2) becomes one or more, preferably from 1.2 to 5, particularly preferably from 1.5 to 2.5, per hydroxyl group of the component (a-1). By selecting the used amount in this manner, a polyurethane having an isocyanate content of from 0.1 to 10 mass% can be obtained. It is desirable that the isocyanate content in the resulting polyurethane be from 1 to 8 mass%.

The reaction temperature at which the polyurethane (A2) described above is produced is generally from 40 to 140°C and preferably from 60 to 130°C. In order to promote the reaction, a known urethane polymerization catalyst may be used, which includes, for example, organometallic compounds such as dioctyl tin dilaurate, dibutyl tin dilaurate, stannous octoate, stannous octoate, lead octylate, lead naphthenate, and zinc octylate; and tert-amine compounds such as triethylenediamine and triethylamine.

The urethane-modified epoxy resin can be produced from the polyepoxy compound (A1) and the polyurethane (A2) in a conventional process.
The used amounts of the components (A1) and (A2) are selected in a mass ratio (former/latter) of preferably from 50/50 to 90/10 and more preferably from 65/35 to 85/25.

The reaction temperature at which the urethane-modified epoxy resin is produced is generally from 40 to 140°C and preferably from 60 to 130°C. In order to promote the modification reaction, a known urethane polymerization catalyst may be used, which includes, for example, organometallic compounds such as dioctyl tin dilaurate, dibutyl tin dilaurate, stannous octoate, stannous octoate, lead octylate, lead naphthenate, and zinc octylate; and tert-amine compounds such as triethylenediamine and triethylamine.

As the urethane-modified epoxy resin (A) used in the present invention, besides the urethane-modified epoxy resin that is obtained by allowing the component (A1) to react with the component (A2), there may be also used a modified epoxy resin that is obtained by modifying a polyepoxized compound (for example, the compound exemplified as the component (A1)) with a polyisocyanate compound (for example, the compound exemplified as the component (a-2)).

As the blocked urethane that is the component (B) used in the present invention, there may be used a blocked urethane that is obtained by blocking, with a blocking agent (B2), a polyurethane (B1) which is obtained from a polyhydroxy compound (b-1) and an excess amount of a polyisocyanate compound (b-2) and has an isocyanate (NCO) content of from 0.1 to 10 mass%.

As the polyhydroxy compound (b-1), there may be mentioned, for example, the compounds that are exemplified as the polyhydroxy compound (a-1).
As the polyhydroxy compound (b-1), there may be preferably used at least one kind selected from a propyleneoxide adduct of glycerin, a propyleneoxide adduct of castor oil, and a polyether polyol such as polytetramethylene glycol, because a hardenable resin composition exhibiting excellent flexibility even at low temperatures can be attained.

As the polyisocyanate compound (b-2), there may be mentioned, for example, the polyisocyanate compounds that are exemplified as the polyisocyanate compound (a-2).
As the polyisocyanate compound (b-2), there may be preferably used at least one kind selected from the group consisting of 1,6-hexamethylene diisocyanate, tolylene diisocyanate, and isophorone diisocyanate, because a hardenable resin composition exhibiting strong adhesion to a metallic substrate can be attained.

The polyurethane (B1) can be produced from the polyhydroxy compound (b-1) and the polyisocyanate compound (b-2) in a conventional process.
The used amounts of the components (b-1) and (b-2) are selected in such a manner that the amount of the component (b-2) is in excess based on that of the component (b-1). Specifically, the used amounts are selected in such a manner that the number of the isocyanate group of the component (b-2) becomes one or more, preferably from 1.2 to 5, particularly preferably from 1.5 to 2.5, per hydroxyl group of the component (b-1). By selecting the used amount in this manner, polyurethane having an isocyanate content of from 0.1 to 10 mass% can be obtained. It is desirable that the isocyanate content in the resulting polyurethane be from 1 to 8 mass%.

The reaction temperature at which the polyurethane (B1) is produced is generally from 40 to 140°C and preferably from 60 to 130°C. In order to promote the reaction, a known urethane polymerization catalyst may be used, which includes, for example, organometallic compounds such as dioctyl tin dilaurate, dibutyl tin dilaurate, stannous octoate, stannous octoate, lead octylate, lead naphthenate, zinc octylate; and tert-amine compounds such as triethylenediamine, triethylamine and the like.

The blocking agent (B2) is selected from the group consisting of phenols such as phenol, cresol, ethylphenol, n-propylphenol, isopropylphenol, butylphenol, tert-butylphenol, octylphenol, nonylphenol, dodecylphenol, cyclohexylphenol, chlorophenol, bromophenol, resorcin, catechol, hydroquinone, bisphenol A, bisphenol S, bisphenol F, naphthol.
Among these blocking agents, there may be preferably used at least one kind selected from the group consisting of diphenols, because a hardenable resin composition exhibiting strong adhesion can be surely attained.

The blocking reaction through which the block polyurethane (B) is obtained from the polyurethane (B1) and the blocking agent (B2) can be performed in a known process. The added amount of the blocking agent (B2) is generally from 1 to 2 equivalents and preferably from 1.05 to 1.5 equivalents per free isocyanate group contained in the polyurethane (B1).

In the blocking reaction of the polyurethane (B1) using the blocking agent (B2), the blocking agent (B2) is generally added at the final stage of the polymerization of the polyurethane (B1), but the blocking agent (B2) may be also added and reacted at any stage of the polymerization of the polyurethane (B1) so as to obtain a block polyurethane.

The blocking agent (B2) can be added at conclusion of polymerization or at the initial stage of polymerization, or part of the blocking agent is added at the initial stage of polymerization and the rest is added at conclusion of polymerization, but it is preferably added at conclusion of polymerization. The conclusion point of polymerization can be determined on the basis of the percent of isocyanate (that can be measured, for example, by the method as described in "Polyurethane" published by Maki Shoten, 1960, p. 21)). The reaction temperature at which the blocking agent is added is generally from 50°C to 150°C and preferably from 60 to 120°C. The reaction time is generally from approximately 1 to 7 hours. The reaction can be promoted by adding the aforementioned known catalyst for urethane polymerization. Further, when the reaction is performed, a plasticizer may be added in an arbitrary amount.

As the blocked urethane that is the component (B) used in the present invention, besides the aforementioned block urethane that is obtained by allowing the component (B1) to react with the component (B2), there may be also used a blocked isocyanate that is obtained by modifying a polyisocyanate compound (for example, the compounds exemplified as the component (a-2), particularly an isocyanurate) with a blocking agent (for example, the blocking agent exemplified as the component (B2)).

As the latent hardener that is the component (C) used in the present invention, there may be preferably used, for example, at least one kind selected from the group consisting of dicyandiamides, modified polyamines, hydrazides, 4,4'-diaminodiphenylsulfone, boron trifluoride amine complex salts, ureas, and melamines. Besides these, guanamines, imidazoles, and the like may be used as the latent hardener.

The modified polyamine may include epoxy-modified, amidization-modified, and Mannich reaction-modified polyamines.

The polyamines that are used for the modified polyamine may include, for example, aliphatic polyamines such as ethylenediamine, diethylenetriamine, triethylenetetramine, tetraethylenepentamine, 1,2-diaminopropane, polyoxypropylenediamine, polyoxypropylenetriamine and the like; alicyclic polyamines such as isophorone diamine, menthene diamine, bis(4-amino-3-methyldicyclohexyl) methane, diaminodicyclohexylmethane, bis(aminomethyl) cyclohexane, N-aminoethylpiperazine, 3,9-bis(3-aminopropyl)-2,4,8,10-tetraoxaspiro(5.5) undecane and the like; mononuclear polyamines such as m-phenylenediamine, p-phenylenediamine, tolylene-2,4-diamine, tolylene-2,6-diamine, mesitylene-2,4-diamine, mesitylene-2,6-diamine, 3,5-diethyltolylene-2,4-diamine, and 3,5-diethyltolylene-2,6-diamine; aromatic polyamines such as biphenylenediamine, 4,4-diaminodiphenylmethane, 2,5-naphthylenediamine, 2,6-naphthylenediamine and the like; and imidazoles such as 2-methylimidazole, 2-ethyl-4-methylimidazole, 2-isopropylimidazole, 2-undecylimidazole, 2-heptadecylimidazole, 2-phenylimidazole, 2-phenyl-4-methylimidazole, 2-aminopropylimidazole and the like.

The aforementioned epoxy-modified polyamines can be produced by allowing the foregoing source polyamines to react with various epoxy resins, which may include glycidylethers such as phenylglycidylether, butylglycidylether, bisphenol A-diglycidylether, bisphenol F-diglycidylether, glycidylesters of carboxylic acids, etc., in a conventional process.

The aforementioned amidization-modified polyamines can be produced by allowing the foregoing source polyamines to react with carboxylic acids such as adipic acid, sebacic acid, phthalic acid, isophthalic acid, dimer acid and the like in a conventional process.

The aforementioned Mannich reaction-modified polyamines can be produced, by allowing the foregoing source polyamines to react with aldehydes such as formaldehyde and phenols such as phenol, cresol, xylenol, tert-butylphenol, and resorcin that have at least one reactive site for aldehydation in the nucleus thereof in a conventional process.

The aforementioned hydrazides may include dihydrazide oxalate, dihydrazide malonate, dihydrazide succinate, dihydrazide glutarate, dihydrazide adipate, dihydrazide suberate, dihydrazide azelate, diahydrazide sebacate, dihydrazide phthalate and the like.

The aforementioned ureas may include 3-(3,4-dichlorophenyl)-1,1-dimethylurea, isophoronediisocyanate-dimethylurea, tolylenediisocyanate-dimethylurea and the like.

Among these latent hardeners, it is preferable that dicyanediamide be used in combination with at least one kind selected from the group consisting of ureas and the modified polyamines that are given by using imidazoles as the polyamines (that is, modified imidazoles), because a hardenable resin composition having a rapid hardening performance at low temperatures and a high adhesion can be obtained. The used ratio of dicyanediamide to the modified imidazoles and/or ureas (former/latter) is preferably from 9/1 to 7/3 by mass.

The hardenable resin composition of the present invention contains the component (A), the component (B), and the component (C). The used amount of the component (A) is preferably from 10 to 95 mass% and particularly preferably from 20 to 80 mass%. The used amount of the component (B) is preferably from 4 to 89 mass% and particularly preferably from 10 to 50 mass%. The used amount of the component (C) is preferably from 1 to 30 mass% and particularly preferably from 3 to 20 mass%. In the case where the used amounts of these components are out of the above ranges, the hardening capability may be poor, and satisfactory properties may not be obtained.

Besides the components (A) to (C), the hardenable resin composition of the present invention, if necessary, may contain additives that are used for conventional hardenable resin compositions, as appropriate.

The hardenable resin composition of the present invention exhibits excellent flexibility over a wide temperature range from low to high temperatures, so that the hardenable resin composition can be preferably used as a structural adhesive that is used for bonding metallic members and the like together in a wide field of applications such as automobiles, ships, aircrafts, spacecrafts, civil engineering and buildings, particularly as a structural adhesive for automobiles. In addition, besides use for structural adhesives, the hardenable resin composition of the present invention can be also used for applications such as various paints, adhesives, and moldings.

### Example

Hereinafter, the hardenable resin composition of the present invention will be further explained in detail with reference to the following examples, but it should be construed that the present invention is in no way limited to those examples.

### Production Example 1: Production of Urethane-Modified Epoxy Resin (UEP 1)

### (1) Production of urethane prepolymer

"ADEKA POLYETHER G-3000" (polypropyleneglycol glycerylether, manufactured by ADEKA Corp.) in an amount of 1000 parts by mass was degassed under a reduced pressure of 30 mmHg or lower at 100 to 110°C for 1 hour. After the degassed "ADEKA POLYETHER G-3000" was cooled to 60°C, 174 parts by mass of tolylene diisocyanate were added and reacted in a nitrogen gas stream at 90 to 100°C for 3 hours. After the NCO content was confirmed to become 3.6 mass%, the reaction was concluded to obtain a urethane prepolymer.

### (2) Production of urethane-modified epoxy resin

To 2800 parts by mass of "ADEKARESIN EP-4100E" (bisphenol type epoxy resin, manufactured by ADEKA Corp., epoxy equivalent: 190), 580 parts by mass of the above obtained urethane prepolymer and 0.075 part by mass of dioctyl tin dilaurate were added, and reacted at 80 to 90°C for 2 hours.
After the absorption of NCO was confirmed to disappear in the IR absorption spectrum, the reaction was concluded to obtain a urethane-modified epoxy resin (UEP1).

### Production Example 2: Production of Blocked Urethane (BU1)

### (1) Production of urethane prepolymer

"ADEKA POLYETHER G-1500" (polypropyleneglycol glycerylether, manufactured by ADEKA Corp.) in an amount of 500 parts by mass was degassed under a reduced pressure of 30 mmHg or lower at 100 to 110°C for 1 hour. After the degassed "ADEKA POLYETHER G-1500" was cooled to 60°C, 221 parts by mass of isophorone diisocyanate and 0.075 part by mass of dioctyl tin dilaurate were added and reacted in a nitrogen gas stream at 90 to 100°C for 3 hours. After the NCO content was confirmed to become 5.9 mass%, the reaction was concluded to obtain a urethane prepolymer.

### (2) Production of blocked urethane

To 721 parts by mass of the above obtained urethane prepolymer, 113 parts by mass of ε-caprolactum and 0.025 part by mass of dioctyl tin dilaurate were added, and reacted at 90 to 100°C for 3 hours.
After the absorption of NCO was confirmed to disappear in the IR absorption spectrum, the reaction was concluded to obtain a block urethane (BU 1).

### Production Example 3: Production of Urethane-Modified Epoxy Resin (UEP2)

### (1) Production of urethane prepolymer

Polytetramethyleneglycol (having an average molecular weight of 2000) in an amount of 1000 parts by mass was degassed under a reduced pressure of 30 mmHg or lower at 100 to 110°C for 1 hour. After the degassed polytetramethyleneglycol was cooled to 60°C, 221 parts by mass of isophorone diisocyanate and 0.025 part by mass of dioctyl tin dilaurate were added and reacted in a nitrogen gas stream at 90 to 100°C for 3 hours. After the NCO content was confirmed to be 3.6 mass%, the reaction was concluded to obtain a urethane prepolymer.

### (2) Production of urethane-modified epoxy resin

To 2800 parts by mass of "ADEKARESIN EP-4100E (bisphenol type epoxy resin, manufactured by ADEKA Corp., epoxy equivalent: 190), 580 parts by mass of the above obtained urethane prepolymer and 0.075 part by mass of dioctyl tin dilaurate were added, and reacted at 80 to 90°C for 2 hours.
After the absorption of NCO was confirmed to disappear in the IR absorption spectrum, the reaction was concluded to obtain a urethane-modified epoxy resin (UEP2).

### Production Example 4: Production of Urethane-Modified Epoxy Resin (UEP3)

### (1) Production of urethane prepolymer

"C-2090" (polycarbonate diol, manufacture by KURARAY Co., Ltd.) in an amount of 1000 parts by mass was degassed under a reduced pressure of 30 mmHg or lower at 100 to 110°C for 1 hour. After the degassed "C-2090" was cooled to 60°C, 221 parts by mass of isophorone diisocyanate and 0.025 part by mass of dioctyl tin dilaurate were added and reacted in a nitrogen gas stream at 90 to 100°C for 3 hours. After the NCO content was confirmed to be 3.6 mass%, the reaction was concluded to obtain a urethane prepolymer.

### (2) Production of urethane-modified epoxy resin

To 2800 parts by mass of "ADEKARESIN EP-4100E" (bisphenol type epoxy resin, manufactured by ADEKA Corp., epoxy equivalent: 190), 580 parts by mass of the above obtained urethane prepolymer and 0.075 part by mass of dioctyl tin dilaurate were added, and reacted at 80 to 90°C for 2 hours.
After the absorption of NCO was confirmed to disappear in the IR absorption spectrum, the reaction was concluded to obtain a urethane-modified epoxy resin (UEP3).

### Production Example 5: Production of Urethane-Modified Epoxy Resin (UEP4)

### (1) Production of urethane prepolymer

"P-2010" (polyesterpolyol, manufactured by KURARAY Co., Ltd.) in an amount of 1000 parts by mass was degassed under a reduced pressure of 30 mmHg or lower at 100 to 110°C for 1 hour. After the degassed "P-2010" was cooled to 60°C, 221 parts by mass of isophorone diisocyanate and 0.025 part by mass of dioctyl tin dilaurate were added and reacted in a nitrogen gas stream at 90 to 100°C for 3 hours. After the NCO content was confirmed to be 3.6 mass%, the reaction was concluded to obtain a urethane prepolymer.

### (2) Production of urethane-modified epoxy resin

To 2800 parts by mass of "ADEKARESIN EP-4100E" (bisphenol type epoxy resin, manufactured by ADEKA Corp., epoxy equivalent: 190), 580 parts by mass of the above obtained urethane prepolymer and 0.075 part by mass of dioctyl tin dilaurate were added, and reacted at 80 to 90°C for 2 hours.
After the absorption of NCO was confirmed to disappear in the IR absorption spectrum, the reaction was concluded to obtain a urethane-modified epoxy resin (UEP4).

### Production Example 6: Production of Blocked Urethane (BU2)

### (1) Production of urethane prepolymer

"URICH-57" (castor oil-propyleneoxide adduct, manufactured by Itoh Oil Chemicals Co., Ltd.) in an amount of 560 parts by mass was degassed under a reduced pressure of 30 mmHg or lower at 100 to 110°C for 1 hour. After the degassed "URICH-57" was cooled to 60°C, 221 parts by mass of isophorone diisocyanate and 0.075 part by mass of dioctyl tin dilaurate were added and reacted in a nitrogen gas stream at 90 to 100°C for 3 hours. After the NCO content was confirmed to be 5.4 mass%, the reaction was concluded to obtain a urethane prepolymer.

### (2) Production of blocked urethane

To 781 parts by mass of the above obtained urethane prepolymer, 113 parts by mass of ε-caprolactam and 0.025 part by mass of dioctyl tin dilaurate were added, and reacted at 90 to 100°C for 3 hours.
After the absorption of NCO was confirmed to disappear in the IR absorption spectrum, the reaction was concluded to obtain a block urethane (BU2).

### Production Example 7

To 781 parts by mass of the urethane prepolymer produced in (1) of Production Example 2, 150 parts by mass of p-tert-butylphenol and 0.025 part by mass of dioctyl tin dilaulate were added, and reacted at 90 to 100°C for 3 hours.
After the absorption of NCO was confirmed to disappear in the IR absorption spectrum, the reaction was concluded to obtain a block polyurethane (BU3).

### Referenced Example 1: Production of Rubber-Modified Epoxy Resin

To 2800 parts by mass of "ADEKARESIN EP-4100E" (bisphenol type epoxy resin, manufactured by ADEKA Corp., epoxy equivalent: 190), 580 parts by mass of acrylonitrilebutadiene rubber were added and reacted at 130 to 150°C for 5 hours.
After the acid value was confirmed to be less than 1, the reaction was concluded to obtain a rubber-modified epoxy resin.

### Examples 1 to 7 and Comparative Examples 1 to 3

Hardenable resin compositions were prepared according to the composition ratios shown in Table 1, using the urethane-modified epoxy resins, block urethanes, and rubber-modified epoxy resin that were obtained in the Production Examples and Referenced Example, together with a latent hardener. The resulting compositions were subjected to the following T-peel test. The results were shown in Table 1.

### T-Peel Test:

In accordance with JIS K 6854-3, using a steel plate as an adherent, T-peel test was performed at a peel speed of 100 mm/min (the resulting measured value was represented by kN/mm). The test was performed at -20°C, 23°C and 100°C, respectively.

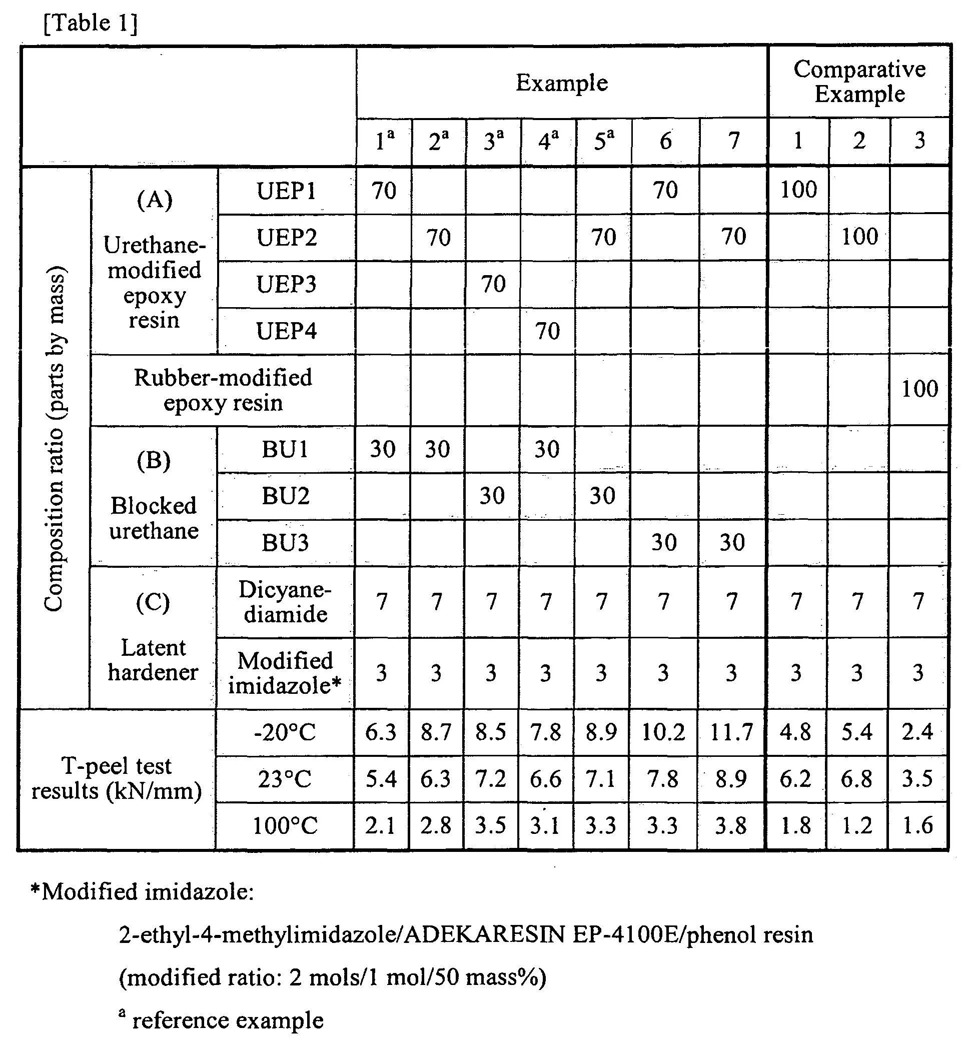

As is clear from the results shown in Table 1, the hardenable resin composition that was composed of the rubber-modified epoxy resin and latent hardener was poor in flexibility (Comparative Example 3). Further, the hardenable resin compositions that were composed of the urethane-modified epoxy resin and latent hardener had improved flexibility at around normal temperature, but had poor flexibility particularly at low temperatures (Comparative Examples 1 and 2).

As opposed to the above, the hardenable resin compositions that were composed of the urethane-modified epoxy resin, blocked urethane, and latent hardener exhibited excellent flexibility over a wide temperature range from low to high temperatures (Examples 1 to 7).

### Industrial Applicability

The hardenable resin composition of the present invention has excellent adhesion to various substrates, providing a hardened product that has flexibility over a wide temperature range from low to high temperatures, so that the hardenable resin composition is suitably used as a structural adhesive, particularly as a structural adhesive for automobiles.

## Claims

1. A hardenable resin composition comprising a urethane-modified epoxy resin (A), a blocked urethane (B), and a latent hardener (C), wherein
the urethane-modified epoxy resin (A) is one obtained by reacting a polyepoxy compound (A1) with a polyurethane (A2), and the polyurethane (A2) is one obtained by reacting a polyhydroxy compound (a-1) with an excess amount of a polyisocyanate (a-2) and has an isocyanate (NCO) content of 0.1 to 10 mass%;
the blocked urethane (B) is one obtained by blocking a polyurethane (B1) with a blocking agent (B2), wherein the blocking agent (B2) is selected from the group consisting of phenols; and the polyurethane (B1) is one obtained by reacting a polyhydroxy compound (b-1) with an excess amount of a polyisocyanate compound (b-2) and has an isocyanate (NCO) content of from 0.1 to 10 mass%.

2. The hardenable resin composition according to claim 1, wherein the polyepoxy compound (A1) that provides the urethane-modified epoxy resin is bisphenol type epoxy resin.

3. The hardenable resin composition according to claim 1 or 2, wherein the polyurethane (A2) that provides the urethane-modified epoxy resin is obtained by using, as the polyhydroxy compound (a-1), at least one kind selected from the group consisting of polyetherpolyol, polycarbonatepolyol and polyesterpolyol, and, as the polyisocyanate compound (a-2), at least one kind selected from the group consisting of 1,6-hexamethylene diisocyanate, tolylene diisocyanate, isophorone diisocyanate and an isocyanurate of 1,6-hexamethylene diisocyanate.

4. The hardenable resin composition according to any of claims 1 to 3, wherein the blocked urethane is one obtained by using, as the polyhydroxy compound (b-1), at least one kind selected from polyetherpolyols, and, as the polyisocyanate compound (b-2), at least one kind selected from the group consisting of 1,6-hexamethylene diisocyanate, tolylene diisocyanate and isophorone diisocyanate.

5. The hardenable resin composition according to any of claims 1 to 4, wherein the latent hardener (C) is at least one kind selected from the group consisting of dicyanediamides, modified polyamines, hydrazides, 4,4'-diaminodiphenylsulfone, boron trifluoride amine complex salts, ureas, and melamines.

6. The hardenable resin composition according to claim 5, wherein the latent hardener (C) is a combination of dicyanediamides and at least one kind selected from the group consisting of modified imidazoles and ureas.

7. The hardenable resin composition according to any of claims 1 to 6, wherein the hardenable resin composition is used as a structural adhesive for automobiles.

## Patentansprüche

1. Härtbare Harzzusammensetzung, umfassend ein Urethanmodifiziertes Epoxidharz (A), ein blockiertes Urethan (B), und einen latenten Härter (C), wobei
das Urethan- modifizierte Epoxidharz (A) eines ist, welches erhalten wird durch Umsetzung einer Polyepoxidverbindung (A1) mit einem Polyurethan (A2), und das Polyurethan (A2) eines ist, welches erhalten wird durch Umsetzung einer Polyhydroxyverbindung (a-1) mit einer überschüssigen Menge eines Polyisocyanats (a-2), und einen Isocyanat (NCO)-Gehalt von 0,1 bis 10 Masse-% hat;
das blockierte Urethan (B) eines ist, welches erhalten wird durch Blockieren eines Polyurethans (B1) mit einem Blockierungsmittel (B2), wobei das Blockierungsmittel (B2) aus der Gruppe ausgewählt wird, welche aus Phenolen besteht; und
das Polyurethan (B1) eines ist, welches erhalten wird durch Umsetzung einer Polyhydroxyverbindung (b-1) mit einer überschüssigen Menge einer Polyisocyanatverbindung (b-2), und einen Isocyanat(NCO)- Gehalt von 0,1 bis 10 Masse-% hat.

2. Die härtbare Harzzusammensetzung nach Anspruch 1, wobei die Polyepoxidverbindung (A1), welche das Urethan-modifizierte Epoxidharz bildet, ein Epoxidharz vom Bisphenoltyp ist.

3. Die härtbare Harzzusammensetzung nach Anspruch 1 oder 2, wobei das Polyurethan (A2), welche das Urethan-modifizierte Epoxidharz bildet, erhalten wird, indem, als die Polyhydroxyverbindung (a-1), mindestens eine Art, ausgewählt aus der Gruppe, bestehend aus Polyetherpolyol, Polycarbonatpolyol und Polyesterpolyol, und, als die Polyisocyanatverbindung (a-2), mindestens eine Art, ausgewählt aus der Gruppe, bestehend aus 1,6-Hexamethylendiisocyanat, Toluylendiisocyanat, Isophorondiisocyanat und einem Isocyanurat von 1,6-Hexamethylendiisocyanat, verwendet wird.

4. Die härtbare Harzzusammensetzung nach einem der Ansprüche 1 bis 3, wobei das blockierte Urethan eines ist, welches erhalten wird, indem, als die Polyhydroxyverbindung (b-1), mindestens eine Art, ausgewählt aus Polyetherpolyolen, und, als die Polyisocyanatverbindung (b-2), mindestens eine Art, ausgewählt aus der Gruppe, bestehend aus 1,6-Hexamethylendiisocyanat, Toluylendiisocyanat und Isophorondiisocyanat, verwendet wird.

5. Die härtbare Harzzusammensetzung nach einem der Ansprüche 1 bis 4, wobei der latente Härter (C) mindestens eine Art ist, ausgewählt aus der Gruppe, bestehend aus Dicyandiamiden, modifizierten Polyaminen, Hydraziden, 4,4'-Diaminodiphenylsulfon, Bortrifluorid-Amin-Komplexsalzen, Harnstoffen und Melaminen.

6. Die härtbare Harzzusammensetzung nach Anspruch 5, wobei der latente Härter (C) eine Kombination aus Dicyandiamiden und mindestens einer Art, ausgewählt aus der Gruppe, bestehend aus modifizierten Imidazolen und Harnstoffen, ist.

7. Die härtbare Harzzusammensetzung nach einem der Ansprüche 1 bis 6, wobei die härtbare Harzzusammensetzung als Strukturklebstoff für Automobile verwendet wird.

## Revendications

1. Composition de résine durcissable comprenant une résine époxy modifiée par un uréthane (A), un uréthane bloqué (B), et un durcisseur latent (C), dans laquelle
la résine époxy modifiée par un uréthane (A) est obtenue en faisant réagir un composé polyépoxy (A1) avec un polyuréthane (A2), et le polyuréthane (A2) est obtenu en faisant réagir un composé polyhydroxy (a-1) avec une quantité excédentaire d'un polyisocyanate (a-2) et présente une teneur en isocyanate (NCO) allant de 0,1 à 10 % en masse ;
l'uréthane bloqué (B) est obtenu en bloquant un polyuréthane (B1) avec un agent de blocage (B2), dans laquelle l'agent de blocage (B2) est choisi dans le groupe constitué de phénols ; et le polyuréthane (B1) est obtenu en faisant réagir un composé polyhydroxy (b-1) avec une quantité excédentaire d'un composé polyisocyanate (b-2) et présente une teneur en isocyanate (NCO) allant de 0,1 à 10 % en masse.

2. Composition de résine durcissable selon la revendication 1, dans laquelle le composé polyépoxy (A1) qui fournit la résine époxy modifiée par un uréthane est une résine époxy de type bisphénol.

3. Composition de résine durcissable selon la revendication 1 ou 2, dans laquelle le polyuréthane (A2) qui fournit la résine époxy modifiée par un uréthane est obtenu en utilisant, en tant que composé polyhydroxy (a-1), au moins un type choisi parmi le groupe constitué de polyétherpolyol, polycarbonatepolyol et de polyesterpolyol, et, en tant que composé polyisocyanate (a-2), au moins un type choisi parmi le groupe constitué de 1,6-hexaméthylène diisocyanate, tolylène diisocyanate, isophorone diisocyanate et d'isocyanurate de 1,6-hexaméthylène diisocyanate.

4. Composition de résine durcissable selon l'une quelconque des revendications 1 à 3, dans laquelle l'uréthane bloqué est obtenu en utilisant, en tant que composé polyhydroxy (b-1), au moins un type choisi parmi les polyétherpolyols, et, en tant que composé polyisocyanate (b-2), au moins un type choisi parmi le groupe constitué de 1,6-hexaméthylène diisocyanate, tolylène diisocyanate et d'isophorone diisocyanate.

5. Composition de résine durcissable selon l'une quelconque des revendications 1 à 4, dans laquelle le durcisseur latent (C) est au moins un type choisi parmi le groupe constitué de dicyanediamides, polyamines modifiées, hydrazides, 4,4'-diaminodiphénylsulfone, sels de complexe amine-trifluorure de bore, urées, et de mélamines.

6. Composition de résine durcissable selon la revendication 5, dans laquelle le durcisseur latent (C) est une combinaison de dicyanediamides et d'au moins un type choisi parmi le groupe constitué d'imidazoles modifiés et d'urées.

7. Composition de résine durcissable selon l'une quelconque des revendications 1 à 6, dans laquelle la composition de résine durcissable est utilisée en tant qu'adhésif structurel pour automobiles.
